# EUROPEAN PATENT APPLICATION

(11) **EP 4 368 025 A1**
(43) Date of publication of application: **15.05.2024**
(21) Application number: 23209321.1
(22) Date of filing: 13.11.2023
(51) Int. Cl.: A21D 2/18, A21D 10/04, A21D 13/80, A23L 29/262, A21D 10/00

(54) **METHOD OF PRODUCING SPONGE CAKE WITH HYDROXYPROPYL METHYLCELLULOSE**

(30) Priority: 14.11.2022 JP 2022181954
(71) Applicant: SHIN-ETSU CHEMICAL CO., LTD., Tokyo 1000005 (JP)
(72) Inventor: KOMATSUKI, Keiichi, Niigata, 9428601 (JP); NIINOBE, Shingo, Niigata, 9428601 (JP)
(74) Representative: Schulz Junghans Patentanwälte PartGmbB

(57) **Abstract**

The objective of the present invention is to provide a method applying a simple all-in-mix method that can produce a sponge cake with improved swelling thereby favorable appearance and texture without impairing the original flavor of the sponge cake by baking a cake dough containing a large number of air bubbles with uniform size and a dough composition for sponge cake suitable for the method. The objective can be achieved by a method of producing a sponge cake, comprising foaming a dough composition comprising hydroxypropyl methylcellulose having a viscosity of 30 mPa·s to 800 mPa·s when measured with a viscometer at 20°C using a 2% by mass aqueous solution, cereal flour comprising light flour, egg, sugar, an expander, edible oil and water by the all-in-mix method to obtain a cake dough, and baking the cake dough to obtain a sponge cake; and the like.

## Description

### Technical Field

The present invention relates to a method of producing a sponge cake and a dough composition for sponge cake employed in the method.

### Background Art

Generally, sponge cake is made by vigorously mixing and foaming a dough composition with use of a mixer or any utensil to obtain a foamed dough composition, and then pouring the resulting foamed dough composition (cake dough) into a cake mold followed by baking the mold in an oven or the like. A sponge cake with a good appearance and a light texture because of improved swelling is highly palatable and desired.

In order to produce such a sponge cake with favorable appearance and texture due to improved swelling, it has been considered a good idea to let a dough composition before baking have more air bubbles with uniform size by means of the foaming operation. Many methods are known for foaming a cake dough. Examples of such methods include a method composed of mixing and foaming sugar and edible oil, adding a raw egg and flour, and then further foaming the mixture (sugar batter method), a method entailing thoroughly mixing and foaming edible oil and flour, adding sugar and a raw egg to the mixture and then further foaming the mixture (flour batter method), and a method composed of separating a raw egg into egg white and egg yolk and foaming the egg white to make meringue while mixing and foaming the egg yolk, flour, sugar and edible oil in a separate container to prepare a cake dough, and then mixing the meringue into the cake dough before baking (separate batter method).

However, these methods correspond to either a method including feeding and mixing raw materials in a stepwise manner or a method including mixing pre-foamed materials with other materials followed by finally combining them so that the production process can be complicated and is unsuitable for mass production. In addition, the methods employing a multi-step foaming process and the methods including a step of mixing only edible oil and powders make the viscosity of the dough and the amounts of the raw materials mixed vary greatly at each mixing stage. As a result, the problem is that equipment for achieving appropriate mixing conditions is limited, and in some cases, a different mixing equipment is required for each mixing stage.

Therefore, in order to achieve the mass production of sponge cake, the all-in-mix method is very useful from the viewpoint of simplicity. The all-in-mix method includes feeding and mixing all dough materials such as edible oil, flour, sugar and egg in one batch to obtain a dough composition, foaming the resulting dough composition to obtain a cake dough, and then baking the resulting cake dough to obtain a sponge cake. However, in the all-in-mix method, edible oil and flour function so as to disappear air bubbles in the dough. As a result, the problem is that it is difficult to let a cake dough contain more air bubbles before baking to obtain a sponge cake with a good puffiness after baking, as compared to the method including raising the dough composition in a stepwise manner.

The method using strong flour with relatively fine particle size instead of light flour which is commonly used as a raw material for cakes is known as an example of a method for improving the poor swelling of the sponge cake produced by the all-in-mix method (see, for example, Patent Document 1).

In addition, the methods using a highly foaming emulsifier or baking powder are generally known as a method for improving the poor swelling of the sponge cake. However, the emulsifier and baking powder have a distinctive flavor. Using them in large quantities causes the flavor of the resulting sponge cake to deteriorate. Therefore, it is considered a method of producing a sponge cake based on the all-in-mix method that does not use the emulsifier and baking powder in large quantities. The method of producing a sponge cake composed of using dextrin alone, or a combination of phospholipids and dextrin homogenized with a homogenizer or any other device as a cake improver is known as an example of such a method (see, for example, Patent Document 2).

### Citation List

### Patent Documents

Patent Document 1: JP 2006-340667 A
Patent Document 2: JP 2016-096761 A

### Summary of the Invention

### Problems to be Solved by the Invention

In the method of Patent Document 1, the viscoelasticity of the cake dough can be enhanced by using strong flour which forms more gluten when kneaded with water. The high viscoelasticity of the cake dough is believed to contribute to the stable retention of air bubbles formed through foaming and function to improve the swelling of sponge cake. However, strong flour that is generally available has a larger particle size than that of light flour, and it is difficult to obtain strong flour with relatively fine particle size. The strong elasticity imparted to the cake dough by gluten formed also prevents the cake dough from swelling during baking so that the baked sponge cake tends to have a heavily specific gravity. Furthermore, the method of Patent Document 1 employs a large amount of strong flour, which can make the texture of the resulting sponge cake heavy. As a result, the light texture required for a sponge cake may be lost. Therefore, the problem is that the method of Patent Document 1 is little effective in improving the swelling of sponge cake and negatively impacts the texture.

On the other hand, the method of Patent Document 2 may improve the swelling of sponge cake by using low molecular weight dextrin alone or a combination of low molecular weight dextrin homogenized with a homogenizer or any other device and phospholipids derived from milk components as a cake improver. However, the method of Patent Document 2 is little effective in improving the swelling by the addition of dextrin alone. Furthermore, when such homogenized dextrin is used, the preparation of homogenized dextrin involves pH adjustment treatment, homogenization treatment using special devices such as a homogenizer, and any other treatment, leading to the problem to make the process design complicated.

Baking powder, conventionally used to improve the poor swelling of sponge cake, has contained aluminum salts such as alum to control the gas-evolving reaction of baking soda and enhance the function of baking powder. Recently, however, the Ministry of Health, Labour and Welfare in Japan has revised the standard specifications for the use of food additives to restrict the amount of aluminum salts that can be used in food products. As a result, the baking powder used in the production of cakes increasingly tends to be aluminum salt-free products. In general, however, the baking powder free from aluminum salts has a poorer ability to improve the swelling of cake dough than the baking powder containing aluminum salts. Thus, in effect, it is difficult to produce a sponge cake with improved swelling by means of the all-in-mix method, even with baking powder.

Furthermore, a method based on the all-in-mix method that can produce a sponge cake with improved swelling while having less impact on the flavor of the resulting sponge cake has been little known so far.

In view of the above circumstances, it is an objective of the present invention to provide a method applying a simple all-in-mix method that can produce a sponge cake with improved swelling thereby favorable appearance and texture without impairing the original flavor of the sponge cake by baking a cake dough containing a large number of air bubbles with uniform size and a dough composition for sponge cake suitable for the method.

### Means of Solving the Problems

In order to solve the above-identified problems, the present inventors earnestly examined and tried to obtain food additives that can improve the poor swelling of sponge cake, although hundreds or thousands of food additives are said to exist. Through the process, the present inventors turned their attention to cellulose derivatives and repeated trial and error in the application of various cellulose derivatives.

As a result, surprisingly, the present inventors found out that among a number of cellulose derivatives, when hydroxypropyl methylcellulose having a predetermined viscosity when measured with a viscometer at 20°C using a 2% by mass aqueous solution was employed as a raw material, the resulting sponge cake had improved swelling thereby favorable appearance and texture, even if a simple all-in-mix method was applied. Furthermore, the present inventors found out that the amount of such hydroxypropyl methylcellulose used may be relatively small so that the resulting sponge cake can have the original cake flavor.

Finally, based on such findings, the present inventors have succeeded in inventing a method of producing a sponge cake employing hydroxypropyl methylcellulose having a predetermined viscosity when measured with a viscometer at 20°C using a 2% by mass aqueous solution and a dough composition for sponge cake suitable for the method as a solution to the problems. As such, the present invention has been completed on the basis of the findings and successful examples that were first found or obtained by the present inventors.

According to the present invention, each of the following aspects is provided:
[1] A method of producing a sponge cake, comprising foaming a dough composition comprising hydroxypropyl methylcellulose having a viscosity of 30 mPa·s to 800 mPa·s when measured with a viscometer at 20°C using a 2% by mass aqueous solution, cereal flour comprising light flour, egg, sugar, an expander, edible oil and water by the all-in-mix method to obtain a cake dough, and baking the cake dough to obtain a sponge cake.
[2] The method of producing a sponge cake according to [1], wherein the content of hydroxypropyl methylcellulose is in the range between 0.05% by mass and 2% by mass relative to the total mass of the cake dough.
[3] The method of producing a sponge cake according to [1] or [2], wherein the expander is an expander free from aluminum salt.
[4] The method of producing a sponge cake according to any one of [1] to [3], wherein the cereal flour is cereal flour comprising 75% by mass or more light flour.
[5] The method of producing a sponge cake according to any one of [1] to [4], wherein the cake dough has a water content of 120 parts by mass to 250 parts by mass relative to 100 parts by mass of the cereal flour.
[6] A dough composition for sponge cake comprising hydroxypropyl methylcellulose having a viscosity of 30 mPa·s to 800 mPa·s when measured with a viscometer at 20°C using a 2% by mass aqueous solution, cereal flour comprising light flour, sugar and an expander.
[7] The dough composition for sponge cake according to [6], wherein the dough composition for sponge cake is in powder form.
[8] A composition for improving the swelling of sponge cake comprising hydroxypropyl methylcellulose having a viscosity of 30 mPa·s to 800 mPa·s when measured with a viscometer at 20°C using a 2% by mass aqueous solution.
[9] A method for improving the swelling of sponge cake comprising using as a raw material hydroxypropyl methylcellulose having a viscosity of 30 mPa·s to 800 mPa·s when measured with a viscometer at 20°C using a 2% by mass aqueous solution.

### Effects of the Invention

Although the method according to one embodiment of the present invention relates to a method including a step of foaming a cake dough based on a simple all-in-mix method, the method can have a cake dough before baking contain a large number of uniform air bubbles. As a result, the method can produce a sponge cake with improved appearance like favorable swelling after baking and with the same texture as that before the improvement. In addition, the method according to one embodiment of the present invention can keep the amount of hydroxypropyl methylcellulose contained to a relatively small amount thereby producing a highly palatable sponge cake with rich flavor but not impairing the original flavor of the cake. Furthermore, according to the present invention, since each of the raw materials employed is readily available, the sponge cake or the dough composition used for producing the sponge cake can be produced in large quantities on an industrial scale.

### Description of Embodiments

While each embodiment of the present invention will now be described in detail, the present invention may take various forms to the extent that its objective can be achieved.

Unless otherwise specified, each term used herein is used in the meaning commonly used by those skilled in the art, in particular in the food field, the chemistry field and other fields, and should not be construed to have any meaning that is unduly limiting. Also, any speculations and theories herein are made on the basis of the knowledge and experiences of the present inventors and as such, the present invention is not bound by any such speculations and theories.

While the term "composition" is not particularly limited and means composition as well known, it is, for example, composed of combination of two or more components (raw materials).

The term "and/or" as used herein means either any one of, any combination of two or more of, or combination of all of listed related items.

The term "content" is synonymous with concentration and amount used (amount added), and means the ratio of the amount of a component relative to the total amount of the composition. However, the total amount of the components may not exceed 100%.

The wording "to" for indicating a range of values is intended to include values preceding and/or following the wording; for example, "0% to 100%" means 0% or more, 100% or less, or a range between 0% or more and 100% or less. The terms "more than" and "less than" used herein means the lower and upper limits without including a value following the term, respectively. For example, "more than 1" means a value beyond 1, and "less than 100" means a value below 100.

The terms "include," "comprise," and "contain" mean that an element(s) other than an element(s) as explicitly indicated can be added as inclusions, which are, for example, synonymous with "at least include," but encompasses the meaning of "consist of" and "substantially consist of". In other words, the terms may mean, for example, to include an element(s) as explicitly indicated as well as any one element or any two or more elements, to consist of an element(s) as explicitly indicated, or substantially consist of an element(s) as explicitly indicated. Such elements include limitations such as components, steps, conditions, and parameters.

The number of digits of an integer equals to its significant figure. For example, 1 has one significant figure and 10 has two significant figures. For a decimal number, the number of digits after a decimal point equals to its significant figure. For example, 0.1 has one significant figure and 0.10 has two significant figures.

The terms "sponge cake" mean one containing cereal flour, egg, sugar and other raw materials, and obtained by mixing and foaming the raw materials to obtain a cake dough, and then baking the cake dough into a spongy shape. When used herein, the mass composed of raw materials for a sponge cake is referred to as the terms "dough composition" or "dough composition for sponge cake," and one obtained by foaming the dough composition or dough composition for sponge cake is referred to as the terms "cake dough."

According to one aspect of the present invention, there is provided a method of producing a sponge cake. The method of producing a sponge cake according to one embodiment of the present invention is characterized by including the step of using hydroxypropyl methylcellulose, which has a viscosity of 30 mPa·s to 800 mPa·s when measured with a viscometer at 20°C using a 2% by mass aqueous solution, together with other raw materials to obtain a cake dough by means of the all-in-mix method. Specifically, the method of producing a sponge cake according to one embodiment of the present invention includes the steps of foaming a dough composition containing hydroxypropyl methylcellulose having a viscosity of 30 mPa·s to 800 mPa·s when measured with a viscometer at 20°C using a 2% by mass aqueous solution, cereal flour containing light flour, egg, sugar, an expander, edible oil and water by means of the all-in-mix method to obtain a cake dough, and baking the cake dough to obtain a sponge cake.

### <Hydroxypropyl methylcellulose>

When using a method of producing a sponge cake based on the all-in-mix method, a sponge cake with improved swelling thereby excellent appearance and texture can be obtained by achieving the following multiple effects: improvement of foaming property of dough composition, improvement of bubble stability to retain air bubbles formed in cake dough until the baking of cake dough is completed, suppression of deflating of cake dough during baking, and suppression of shrinkage of sponge cake after baking.

The present inventors attempted to achieve the above effects by using methylcellulose and hydroxypropyl methylcellulose, which are water-soluble polymers that have both the thermal gelation property and surface activity, as a raw material in a dough composition for sponge cake.

After repeated trial and error, the present inventors have found out that in the all-in-mix method including simultaneously mixing several raw materials such as cereal flour, egg, sugar and edible oil to obtain a uniform suspension, it was preferable to employ hydroxypropyl methylcellulose which has more excellent solubility in water, and furthermore, it was preferable to employ hydroxypropyl methylcellulose having a viscosity within a predetermined range when measured with a viscometer at 20°C using a 2% by mass aqueous solution in order to allow a dough composition, a cake dough and a sponge cake to properly achieve the above-identified multiple effects for improving appearance of the sponge cake.

The viscosity at 20°C of the 2% by mass aqueous solution of hydroxypropyl methylcellulose may be in the range between 30 mPa·s and 800 mPa·s. For example, the viscosity may be, from the viewpoint of solubility of hydroxypropyl methylcellulose in water, foaming property of dough composition, bubble stability of cake dough and/or prevention of deflating of sponge cake, preferably 40 mPa·s to 600 mPa·s, and more preferably 50 mPa·s to 400 mPa·s. When the viscosity at 20°C of the 2% by mass aqueous solution of hydroxypropyl methylcellulose is less than 30 mPa·s, the effect of preventing the sponge cake from deflating during baking tends to decrease. When the viscosity at 20°C of the 2% by mass aqueous solution of hydroxypropyl methylcellulose is more than 800 mPa·s, the solubility of hydroxypropyl methylcellulose in water and the foaming property of dough composition tend to decrease.

The viscosity at 20°C of the 2% by mass aqueous solution of hydroxypropyl methylcellulose is the value (intrinsic viscosity) obtained when measured using an Ubbelohde-type viscometer as described in The Japanese Pharmacopoeia, 18th Edition.

Hydroxypropyl methylcellulose is not particularly limited in other properties as long as the viscosity at 20°C of the 2% by mass aqueous solution of hydroxypropyl methylcellulose is within the range described above. For example, as the other properties, the degree of substitution (DS) of methoxy groups and molar substitution (MS) of hydroxypropoxy groups in hydroxypropyl methylcellulose may be preferably within a predetermined range from the standpoint of solubility of hydroxypropyl methylcellulose in water, foaming property of dough composition, reduction of deflating of cake dough during baking, and/or reduction of shrinkage of sponge cake after baking.

In view of the above standpoint, DS of methoxy groups in hydroxypropyl methylcellulose is, for example, preferably 1.60 to 2.10, and more preferably 1.70 to 2.00; and/or MS of hydroxypropoxy groups in hydroxypropyl methylcellulose, for example, preferably 0.10 to 0.30, and more preferably 0.13 to 0.27.

DS of methoxy groups in hydroxypropyl methylcellulose refers to the average number of methoxy groups per unit of anhydrous glucose. MS of hydroxypropoxy groups in hydroxypropyl methylcellulose refers to the average number of moles of hydroxypropoxy groups per mole of anhydrous glucose. DS of methoxy groups and MS of hydroxypropoxy groups in hydroxypropyl methylcellulose are determined by converting the values measured by the substitutability assay for the section "Hypromellose" (Hydroxypropyl Methylcellulose) described in The Japanese Pharmacopoeia, 18th edition.

The content of hydroxypropyl methylcellulose is not particularly limited as long as the content is an amount that can improve the poor swelling of the sponge cake obtained after baking. From the viewpoint of foaming property of dough composition, bubble stability of cake dough, reduction of deflating of cake dough, reduction of shrinkage of sponge cake after baking and/or texture of sponge cake, examples of the content include, relative to the total mass of cake dough, preferably 0.05% by mass to 2% by mass, more preferably 0.05% by mass to 1% by mass, and still more preferably 0.1% by mass to 0.85% by mass. Hydroxypropyl methylcellulose may be used either individually or in combination of two or more as long as it has the properties described above.

### <Cereal flour>

Light flour (soft flour, weak flour) is employed as the cereal flour employed in the method of producing a sponge cake according to one embodiment of the present invention in terms of the texture and flavor of the sponge cake. Light flour is produced by grinding the endosperm portion in the wheat grain of soft wheat and has a protein content of about 9.5% by mass or less, preferably 6.0% by mass to 9.5% by mass. However, any other cereal flour may be used in combination with light flour as long as the other flour does not deteriorate the texture and flavor of sponge cake. Examples of the other cereal flours include, but are not limited to, strong flour, semi-strong flour, medium-strength flour, durum flour, whole wheat flour, rye flour, barley flour, rice flour, corn flour, buckwheat flour, soy flour, corn starch, tapioca starch, wheat starch, sweet potato starch, sago starch, rice starch, and processed starch.

When light flour and the other cereal flour are used as the cereal flour, the content of light flour is preferably 75% by mass or more, and more preferably 90% by mass to 99.9% by mass relative to the total mass of cereal flour from the viewpoint of texture and flavor of sponge cake. The cereal flour may preferably consist only of light flour. In other words, the content of light flour may be preferably 100% by mass as the cereal flour.

The content of the cereal flour is not particularly limited as long as the content is an amount normally employed in the preparation of sponge cake. Examples of the content include preferably 10% by mass to 35% by mass relative to the total mass of the cake dough, and from the viewpoint of texture of the sponge cake and swelling of the cake dough during baking, more preferably 15% by mass to 30% by mass.

### <Egg>

The egg employed in the method of producing a sponge cake according to one embodiment of the present invention is not particularly limited as long as the egg is one employed as a raw material for sponge cakes. Examples of the egg include chicken eggs. The chicken egg may be a whole egg, egg yolk or egg white. The chicken egg may be one obtained by processing the chicken egg. Examples of the processed egg include a sweetened whole egg, a sweetened egg yolk, a sweetened egg white, a salted whole egg, a salted egg yolk and a salted egg white. The egg used may be in any form, and may be a refrigerated, frozen, dried, or enzyme-treated egg. For example, the egg may be preferably a refrigerated egg in terms of the foaming ability.

The content of the egg is not particularly limited as long as the content is an amount normally employed in the preparation of sponge cake. Examples of the content include, if the egg is a whole egg, preferably 10% by mass to 50% by mass relative to the total mass of the cake dough from the viewpoint of foaming property of the dough composition and flavor of the sponge cake.

### <Sugar>

The sugar employed in the method of producing a sponge cake according to one embodiment of the present invention is not particularly limited as long as the sugar is one employed as a raw material for sponge cakes. Examples of the sugar include sucrose, granulated sugar, superfine sugar (caster sugar), glucose, fructose, isomerized sugar, invert sugar; oligosaccharides, such as isomaltooligosaccharide, reduced xylooligosaccharide, reduced gentiooligosaccharide, xylooligosaccharide, gentiooligosaccharide, nigerooligosaccharide, teandeoligosaccharide, soybean oligosaccharide and fructo-oligosaccharide; trehalose, starch syrup, reduced starch syrup, and honey. The sugar may be used either individually or in combination of two or more of the above-mentioned sugars.

The content of the sugar is not particularly limited as long as the content is an amount normally employed in the preparation of sponge cake. Examples of the content include preferably 5% by mass to 40% by mass relative to the total mass of the cake dough, and from the viewpoint of flavor of the sponge cake and bubble stability of the cake dough, more preferably 10% by mass to 35% by mass.

### <Expander>

The expander employed in the method of producing a sponge cake according to one embodiment of the present invention is not particularly limited as long as the expander functions to make a cake dough expand during baking. Examples of the expander include baking powder, baking soda (sodium bicarbonate), ammonium carbonate and ammonium bicarbonate. The baking powder generally contains a gas-generating agent, including but not limited to the group of sodium bicarbonate, sodium carbonate and ammonium bicarbonate; an auxiliary agent that facilitates the decomposition of the gas-generating agent, including but not limited to the group of disodium dihydrogen pyrophosphate, potassium hydrogen tartrate and calcium dihydrogen phosphate; and a preserving agent, including but not limited to the group of cornstarch, starch and wheat flour. The auxiliary agent may include alum, potassium aluminium sulphate and sodium aluminium phosphate. The expander is preferably the baking powder because it tends to make the cake dough expand more consistently during baking. In addition, in view of the trend toward avoiding the use of aluminum salt in food production, the expander is preferably an expander free from aluminum salt, e.g., aluminum-salt-free baking powder that does not contain potassium aluminum sulfate or any other aluminum salt as an auxiliary agent.

The content of the expander is not particularly limited as long as the content is an amount normally employed in the preparation of sponge cake. Examples of the content include preferably 0.1 % by mass to 2% by mass relative to the total mass of the cake dough, and from the viewpoint of improved swelling of the cake dough during baking and flavor of the sponge cake, more preferably 0.2% by mass to 1.5% by mass.

### <Edible oil>

The edible oil employed in the method of producing a sponge cake according to one embodiment of the present invention is not particularly limited as long as the edible oil is one employed as a raw material for sponge cakes. Examples of the edible oil include vegetable oils such as coconut oil, palm oil, soybean oil, rapeseed oil, cottonseed oil, corn oil, sunflower oil and olive oil; milk fat, butter, margarine, and shortening. The edible oil may be used either individually or in combination of two or more of the above-mentioned edible oils.

The content of the edible oil is not particularly limited as long as the content is an amount normally employed in the preparation of sponge cake. Examples of the content include preferably 0.5% by mass to 10% by mass relative to the total mass of the cake dough, and from the viewpoint of bubble stability of the cake dough and flavor of the sponge cake, more preferably 1% by mass to 5% by mass.

### <Water>

Water is not particularly limited as long as water is water used in producing a sponge cake. Examples of water include tap water and purified water. Water may also be a water-containing component such as milk whose large part is water. Water may be used either individually or in combination of two or more of the above-mentioned water.

Water is used in producing a sponge cake for the purpose of properly regulating the water content in a cake dough. As used herein, the water content of the cake dough is determined as the total amount of water used and water in the egg. For example, if tap water is used as water and a whole egg is used as the egg, the water content (mass) of the cake dough in this case is the sum of the amount of water used (mass) and 75% of the amount of the whole egg used (mass) because the water content of a whole egg is 75% by mass.

The water content of the cake dough is not particularly limited as long as it is an amount normally adjusted in producing a sponge cake. Examples of the water content include, from the viewpoint of swelling of the cake dough and texture of the sponge cake, preferably 120 parts by mass to 250 parts by mass and more preferably 130 parts by mass to 220 parts by mass relative to 100 parts by mass of cereal flour; or preferably 30% by mass to 60% by mass and more preferably 40% by mass to 50% by mass relative to the total mass of the cake dough.

### <Other components>

The method of producing a sponge cake according to one embodiment of the present invention may employ any other component in addition to hydroxypropyl methylcellulose, cereal flour, egg, sugar, an expander, edible oil, and water. Examples of the other component include, but are not limited to, emulsifiers, nuts, fruit-based ingredients, thickening stabilizers, flavors, preservatives, antioxidants, coloring agents, and seasonings. The following are non-limiting examples of some other components.

Examples of the emulsifier include glycerol fatty acid esters, polyglycerol fatty acid esters, sorbitan fatty acid esters, propylene glycol fatty acid esters, sucrose fatty acid esters, lecithin, saponin, and polysorbate. The emulsifier may be used either individually or in combination of two or more of the above-mentioned emulsifiers. The emulsifier may be in the form of a commercial formulation containing other ingredients, such as sweeteners and solvents. While the content of the emulsifier is not particularly limited, examples of the content include, from the viewpoint of foaming property of the dough composition and flavor of the sponge cake, preferably 0.1% by mass to 5% by mass and more preferably 0.1% by mass to 2.2% by mass relative to the total mass of the cake dough.

Examples of nuts include almonds, peanuts, macadamia nuts, walnuts, pistachios, cashews, hazelnuts, and picanuts. Nuts may be used either individually or in combination of two or more of the above-mentioned nuts. Nuts may be roasted, oiled, baked or other processed products, or may be in powder form like ground almonds which are commonly used as a raw material for baked sweets. While the content of nuts is not particularly limited, examples of the content include 0.1% by mass to 50% by mass relative to the total mass of the cake dough.

Examples of fruit-based ingredients include strawberries, apples, grapes, figs, persimmons, blueberries, bananas, apricots, oranges, lemons, pineapples, mangoes, peaches, dates, coconuts, plums, and cranberries. Fruit-based ingredients may be used either individually or in combination of two or more of the above-mentioned fruit-based ingredients. Fruit-based ingredients may be freshly cut, dried, or soaked in sugar and sugar solutions. While the content of fruit-based ingredients is not particularly limited, examples of the content include 0.1% by mass to 50% by mass relative to the total mass of the cake dough.

Examples of the thickening stabilizer include xanthan gum, guar gum, locust bean gum, tragacanth gum, tamarind seed gum, talagum, curdlan, ramzan gum, gati gum, glucomannan, karaya gum, deacyl gellan gum, native gellan gum, Arabic gum, carrageenan, agar, gelatin, pectin, alginates, CMC, microcrystalline cellulose, and fermented cellulose. The thickening stabilizer may be used either individually or in combination of two or more of the above-mentioned thickening stabilizers. While the content of the thickening stabilizer is not particularly limited, examples of the content include 0.01% by mass to 5% by mass relative to the total mass of the cake dough.

Examples of the flavor include vanilla essence, milk flavor, limonene, cinnamon, and orange flavor. Examples of the preservative include phosphate, polymerized phosphate, citrate, and acetate. Examples of the antioxidant include L-ascorbic acid, isoascorbic acid, catechin, and tocopherol. Examples of the coloring agent include safflower dye, caramel dye, turmeric dye, carotenoid dye, and gardenia dye. Examples of the seasoning include dietary salt, miso, and alcoholic beverages. The flavor, preservative, antioxidant, coloring agent and seasoning may be used either individually or in combination of two or more of the above-mentioned ones, respectively. The content of the flavor, preservative, antioxidant, coloring agent or seasoning is not particularly limited and may be an amount normally used in producing a sponge cake as long as the content does not prevent the present invention from solving the problems.

### <Method of producing sponge cake>

The method of producing a sponge cake according to one embodiment of the present invention includes the step of raising (foaming) a dough composition containing raw materials such as hydroxypropyl methylcellulose whose viscosity is in a predetermined range by the all-in-mix method to obtain a cake dough.

The terms "all-in-mix method" as used herein refers to a method composed of putting all of raw materials that constitute a dough composition into a container and the like followed by foaming the dough composition to obtain a cake dough. In other words, the all-in-mix method is characterized by gathering the whole dough composition in one place before foaming followed by subjecting the whole dough composition to foaming treatment simultaneously. Therefore, the all-in-mix method is different from the sugar batter and flour batter methods that include adding and mixing a portion of the dough composition in a stepwise manner followed by foaming the mixture; the post-flour method including foaming a portion of the dough composition in advance followed by adding cereal flour; and the separate batter method including foaming a portion of the dough composition and separately foaming egg white to make meringue followed by mixing them before baking.

However, in the all-in-mix method employed by the present invention, a portion of the dough composition may be pre-mixed before foaming. In other words, except for the foaming components such as egg and edible oil out of raw materials that constitute the dough composition, a portion of the dough composition may be mixed in advance. For example, mixing powder components, such as hydroxypropyl methylcellulose and cereal flour, out of raw materials that constitute the dough composition in advance might not lead to foaming.

In the step of obtaining a cake dough, the dough composition containing hydroxypropyl methylcellulose, cereal flour, egg, sugar, an expander, edible oil and water is foamed by the all-in-mix method to obtain the cake dough. In the step of obtaining a cake dough, the devices and conditions used to foam the dough composition are not particularly limited, as long as they are suitable to the all-in-mix method. The foaming treatment of the dough composition may be carried out, for example, by stirring the dough composition at high speed using a stirring device. The stirring device, stirring speed, stirring time, stirring temperature and other stirring conditions employed in stirring the dough composition are not particularly limited. Examples of the stirring device include vertical mixers, horizontal mixers, slurry mixers, continuous mixers and pressurized mixers. Examples of the stirring temperature include preferably 10°C to 40°C.

The degree of foaming the cake dough may be a degree to visually confirm that sufficient air bubbles are generated in the cake dough. The foaming of the cake dough may also be confirmed by using the specific gravity of the cake dough as a standard. The specific gravity of the cake dough is indicated based on the density at 4°C of water under standard atmospheric pressure and is not particularly limited. Examples of the specific gravity of the cake dough include, from the viewpoint of swelling of the sponge cake after baking, preferably 0.2 to 0.7, and more preferably 0.3 to 0.6.

Other physical properties of the cake dough are not particularly limited. For example, the viscosity of the cake dough is preferably 0.1 Pa·s to 200 Pa·s from the viewpoint of easily pouring the cake dough into a cake mold.

The method according to one embodiment of the present invention includes the step of baking the obtained cake dough to obtain a sponge cake.

The condition for baking the cake dough is not particularly limited as long as it is the condition normally applied in producing a sponge cake. For example, the sponge cake may be produced by pouring the foamed dough composition (cake dough) into the desired cake mold followed by subjecting the cake mold to heating treatment using an oven, a steamer or any other heating device. The condition for the heating treatment is not particularly limited. For example, the heating temperature may be preferably 120°C to 200°C, the heating time may be preferably 10 minutes to 60 minutes, and no steam may be preferably supplied.

After baking, the sponge cake may be left as it is out of the cake mold, or may be left to cool under room temperature or in a cool place.

### <Sponge cake>

The sponge cake produced by the method of producing a sponge cake according to one embodiment of the present invention has a good appearance with improved swelling thereby being soft and having a good texture.

The characteristics of the sponge cake produced by the method of producing a sponge cake according to one embodiment of the present invention may be evaluated, for example, by the height evaluation, sensory evaluation and cross-sectional bubble evaluation as described in Examples below. In particular, the sponge cake produced by the method of producing a sponge cake according to one embodiment of the present invention tends to be more excellent in shoulder height, center height, texture, number of bubbles in the cross section surface and/or softness when compared to the sponge cake obtained by carrying out the steps of obtaining a cake dough followed by obtaining a sponge cake in the same manner except that hydroxypropyl methylcellulose is not used.

According to the cross-sectional bubble evaluation, the sponge cake produced by the method of producing a sponge cake according to one embodiment of the present invention may contain a large number of uniform air bubbles with a moderate size, resulting in the properties of improved swelling, favorable softness, favorable elasticity upon eating, and favorable melt-in-the-mouth.

The sponge cake produced by the method of producing a sponge cake according to one embodiment of the present invention may be consumed as it stands or with a topping of food materials including whipped cream, sweeteners such as honey, and fruits such as strawberries, berries, and peaches. The sponge cake produced by the method of producing a sponge cake according to one embodiment of the present invention may be preferably sealed or hermetically sealed, and preferably stored at room temperature or in a cool place.

### <Dough composition>

According to another aspect of the present invention, there is provided a dough composition for sponge cake, used to carry out the method of producing a sponge cake according to one embodiment of the present invention. The dough composition for sponge cake according to one embodiment of the present invention contains hydroxypropyl methylcellulose, cereal flour, sugar, and an expander. The specific embodiment of the dough composition for sponge cake is a dough composition for sponge cake containing hydroxypropyl methylcellulose having a viscosity of 30 mPa·s to 800 mPa·s when measured with a viscometer at 20°C using a 2% by mass aqueous solution, cereal flour containing light flour, sugar and an expander.

The dough composition for sponge cake according to one embodiment of the present invention is preferably in powder form, which can be used as a sponge cake mix powder suitable for the all-in-mix method.

Hydroxypropyl methylcellulose, cereal flour, sugar, and the expander can be used as described above. The sugar is preferably in solid form, such as powder or granulated form. Among the sugars listed above, sucrose, granulated sugar, caster sugar, dextrose, fructose, inverted sugar, fructooligosaccharide, and trehalose are preferred as the sugar.

The content of hydroxypropyl methylcellulose, the cereal flour, the sugar or the expander contained in the dough composition for sponge cake is not particularly limited. Each content may be set such that each raw material reaches the above-mentioned amount in the cake dough obtained by adding egg, edible oil, water, and any other component to the dough composition for sponge cake and foaming the mixture. The following non-limiting examples of the content of hydroxypropyl methylcellulose, the cereal flour, the sugar and the expander in the dough composition for sponge cake are recited.

The content of hydroxypropyl methylcellulose is preferably 0.15% by mass to 2.0% by mass, and more preferably 0.20% by mass to 1.8% by mass relative to the total mass of the dough composition for sponge cake.

The content of the cereal flour is preferably 25% by mass to 70% by mass relative to the total mass of the dough composition for sponge cake.

The content of the sugar is preferably 25% by mass to 70% by mass relative to the total mass of the dough composition for sponge cake.

The content of the expander is preferably 0.5% by mass to 4% by mass relative to the total mass of the dough composition for sponge cake.

When the dough composition for sponge cake according to one embodiment of the present invention is in powder form and the entire raw materials are also in powder form, the raw materials may be mixed manually or mixed mechanically using a mixer or any other device. On the other hand, if some of the raw materials are not in powder form, the entire raw materials may be mixed after or simultaneously with grinding them using a mill or any other device.

The dough composition for sponge cake according to one embodiment of the present invention may be formed into a container-packed composition in which it is packed and sealed in a container. While the container is not particularly limited, examples of the container include packaging containers such as bags, pouches, packs, boxes, bottles, tubes, jars, and cans, made of plastics such as PE, PP, PET, PBT and PVC; metals such as aluminum; paper; and glass, in a single or laminated form. The container-packed composition can be produced by filling the dough composition for sponge cake produced into a container, and can stand on its own and be commercially available for distribution. In this sense, the container-packed composition is clearly different from any intermediate products that are prepared during the production of sponge cakes.

### <Other aspects of the invention>

The use of hydroxypropyl methylcellulose whose viscosity is in a predetermined range allows a cake dough having many uniform air bubbles to be produced by applying a simple all-in-mix method so that the cake dough can be baked and produce a sponge cake with improved swelling thereby favorable appearance and texture. In view of this, the following other aspects of the present invention are provided: a composition for improving the swelling of sponge cake containing hydroxypropyl methylcellulose having a viscosity of 30 mPa·s to 800 mPa·s when measured with a viscometer at 20°C using a 2% by mass aqueous solution; and a method for improving the swelling of sponge cake including using as a raw material hydroxypropyl methylcellulose having a viscosity of 30 mPa·s to 800 mPa·s when measured with a viscometer at 20°C using a 2% by mass aqueous solution.

### Examples

While the present invention will now be described in further detail with reference to Examples and Comparative Examples, the present invention is not limited to what is described in these Examples and Comparative Examples.

### <Cellulose derivatives>

The cellulose derivatives used in Examples and Comparative Examples are listed below.

Hydroxypropyl methylcellulose-1 (hereinafter also referred to as "HPMC-1") was manufactured by Shin-Etsu Chemical. The viscosity (20°C) of HPMC-1 measured using the 2% by mass aqueous solution was 50 mPa·s. The degree of substitution (DS) of methoxy groups and molar substitution (MS) of hydroxypropoxy groups in HPMC-1 were 1.9 and 0.25, respectively.

Hydroxypropyl methylcellulose-2 (hereinafter also referred to as "HPMC-2") was manufactured by Shin-Etsu Chemical. The viscosity (20°C) of HPMC-2 measured using the 2% by mass aqueous solution was 400 mPa·s. The degree of substitution (DS) of methoxy groups and molar substitution (MS) of hydroxypropoxy groups in HPMC-2 were 1.8 and 0.15, respectively.

Hydroxypropyl methylcellulose-3 (hereinafter also referred to as "HPMC-3") was manufactured by Shin-Etsu Chemical. The viscosity (20°C) of HPMC-3 measured using the 2% by mass aqueous solution was 3 mPa·s. The degree of substitution (DS) of methoxy groups and molar substitution (MS) of hydroxypropoxy groups in HPMC-3 were 1.9 and 0.25, respectively.

Hydroxypropyl methylcellulose-4 (hereinafter also referred to as "HPMC-4") was manufactured by Shin-Etsu Chemical. The viscosity (20°C) of HPMC-4 measured using the 2% by mass aqueous solution was 4,000 mPa·s. The degree of substitution (DS) of methoxy groups and molar substitution (MS) of hydroxypropoxy groups in HPMC-4 were 1.8 and 0.15, respectively.

Methylcellulose-1 (hereinafter also referred to as "MC-1") was manufactured by Shin-Etsu Chemical. The viscosity (20°C) of MC-1 measured using the 2% by mass aqueous solution was 15 mPa·s. The degree of substitution (DS) of methoxy groups in MC-1 was 1.8. Methylcellulose-2 (hereinafter also referred to as "MC-2") was manufactured by Shin-Etsu Chemical. The viscosity (20°C) of MC-2 measured using the 2% by mass aqueous solution was 100 mPa·s. The degree of substitution (DS) of methoxy groups in MC-2 was 1.8.

### <Methods for evaluating cellulose derivatives>

### [Viscosity of cellulose derivatives]

If the expected viscosity of the 2% by mass aqueous solution of cellulose derivatives was less than 600 mPa·s, an amount of cellulose derivatives corresponding to 4.0 g of the dried product was accurately weighed in a jar (diameter: 65 mm, height: 120 mm, volume: 350 ml). To the jar, hot water at 98°C was added to amount to 200.0 g. The mixture contained in the jar was stirred at 350 rpm to 450 rpm for 20 minutes using an agitator until the mixture reached a state of uniform dispersion. Subsequently, the dispersion was stirred for 40 minutes in a water bath at 5°C or less to dissolve cellulose derivatives in the dispersion to obtain a 2% by mass aqueous solution of cellulose derivatives.

If the expected viscosity of the 2% by mass aqueous solution of cellulose derivatives was equal to or more than 600 mPa·s, an amount of cellulose derivatives corresponding to 10.0 g of the dried product was accurately weighed in a jar (diameter: 65 mm, height: 120 mm, volume: 350 ml). To the jar, hot water at 98°C was added to amount to 500.0 g. The mixture contained in the jar was stirred at 350 rpm to 450 rpm for 20 minutes using an agitator until the mixture reached a state of uniform dispersion. Subsequently, the dispersion was stirred for 40 minutes in a water bath at 5°C or less to dissolve cellulose derivatives in the dispersion to obtain a 2% by mass aqueous solution of cellulose derivatives.

The viscosity at 20°C of the 2% by mass aqueous solution of cellulose derivatives was determined by using an Ubbelohde-type viscometer according to the section "1. Method I Viscosity measurement by capillary tube viscometer" in the General Tests "2.53 Viscosity Determination" in The Japanese Pharmacopoeia, 18th Edition https://www.mhlw.go.jp/content/11120000/000945683.pdf

### [Degree of substitution of methoxy groups (DS) and molar substitution of hydroxypropoxy groups (MS)]

DS and MS were converted from the results determined according to the quantitative method "Assay" described in the sections "Hypromellose" (https://www.mhlw.go.jp/content/11120000/000904440.pdf) and "Methylcellulose" (https://www.mhlw.go.jp/content/11120000/000904449.pdf) in The Japanese Pharmacopoeia, 18th Edition.

### <Preparation of sponge cake according to all-in-mix method>

The sponge cakes of Examples 1 to 4 and Comparative Examples 1 to 5 were prepared in the following manner. Each amount of cellulose derivatives used in Examples 1 to 4 and Comparative Examples 2 to 5 was the amount that resulted in a viscosity of 50 ± 5 mPa·s when the cellulose derivatives were dissolved to make an aqueous solution, in order to reduce the effect of viscosity during dissolution between the examples.

**[Table 1]**

| | Viscosity of 2% by mass aqueous solution | Concentration of prepared solution | Viscosity of prepared solution |
|---|---|---|---|
| | (mPa·s) | (%) | (mPa·s) |
| HPMC-1 | 50 | 2.0 | 55 |
| HPMC-2 | 400 | 1.0 | 46 |
| HPMC-3 | 3 | 9.0 | 45 |
| HPMC-4 | 4000 | 0.6 | 55 |
| MC-1 | 15 | 3.0 | 55 |
| MC-2 | 100 | 1.5 | 47 |

### [Example 1]

The powdered raw materials, i.e., caster sugar, light flour, the expander "baking powder" (manufactured by ROYAL), and HPMC-1, were added to a bag, and the bag was shaken to mix the raw materials, and the resulting mixed powder was placed in a mixer bowl. The liquid or oily raw materials, i.e., whole egg, butter, water, and the emulsifier "RYOTO ESTER SP-A" (manufactured by Mitsubishi Chemical), were then added to the mixer bowl to obtain a dough composition.

The resulting dough composition was then mixed and foamed with the vertical mixer "KSM5WH" (manufactured by KitchenAid) at the speed of 10 (maximum speed) for 15 minutes at room temperature to obtain a foamed dough composition (cake dough).

Then, 350 g of the resulting foamed dough composition was poured into a No. 6 cake mold lined with parchment paper, and the cake mold was placed in a convection oven and baked at 160°C for 25 minutes with no use of steam. After baking, the resulting sponge cake was removed from the cake mold and then allowed to cool at room temperature for 30 minutes to obtain the sponge cake of Example 1. The amounts of raw materials added are shown in Table 2.

### [Example 2]

The sponge cake of Example 2 was obtained in the same manner as in Example 1, except that HPMC-2 was used instead of HPMC-1 and the amounts of raw materials added were as shown in Table 2.

### [Comparative Example 1]

The sponge cake of Comparative Example 1 was obtained in the same manner as in Example 1, except that no HPMC-1 was used and the amounts of raw materials added were as shown in Table 2.

### [Comparative Example 2]

The sponge cake of Comparative Example 2 was obtained in the same manner as in Example 1, except that HPMC-3 was used instead of HPMC-1 and the amounts of raw materials added were as shown in Table 2.

### [Comparative Example 3]

The sponge cake of Comparative Example 3 was obtained in the same manner as in Example 1, except that HPMC-4 was used instead of HPMC-1 and the amounts of raw materials added were as shown in Table 2.

### [Comparative Example 4]

The sponge cake of Comparative Example 4 was obtained in the same manner as in Example 1, except that MC-1 was used instead of HPMC-1 and the amounts of raw materials added were as shown in Table 2.

### [Comparative Example 5]

The sponge cake of Comparative Example 5 was obtained in the same manner as in Example 1, except that MC-2 was used instead of HPMC-1 and the amounts of raw materials added were as shown in Table 2.

HPMC-1 and HPMC-2 were used in the sponge cakes of Examples 1 and 2 and showed an excellent swelling-enhancing effect. Here, the sponge cakes of Examples 3 and 4 were prepared and evaluated according to the following conditions to find the amounts of HPMC-1 and HPMC-2 that could result in the swelling-enhancing effect.

### [Example 3]

The sponge cake of Example 3 was obtained in the same manner as in Example 1, except that the amounts of raw materials including HPMC-1 were as shown in Table 2.

### [Example 4]

The sponge cake of Example 4 was obtained in the same manner as in Example 1, except that HPMC-2 was used instead of HPMC-1 and the amounts of raw materials added were as shown in Table 2.

### <Preparation of sponge cake according to egg white separate batter method>

The sponge cakes of Reference Examples 1 to 4 were prepared according to the egg white separate batter method in the following manner, using HPMC-4, MC-1 and MC-2 which showed no good results by the all-in-mix method.

### [Reference Example 1]

HPMC-4 and caster sugar (30 g), which were in powder form, were mixed uniformly. The whole egg was separated into egg yolk and egg white. The mixed powder of HPMC-4 and caster sugar, egg white, and water were then added to a bowl, and they were mixed and foamed with the hand mixer "DL-2392 Turbo Hand Mixer" (manufactured by Kai Corporation) at the speed of 5 at room temperature for 10 minutes to obtain a meringue A for sponge cake.

Egg yolk and caster sugar (90 g) were added to a separate bowl, and they were mixed uniformly with a whisk to obtain a mixed solution B. Light flour and the expander were passed through a powder sieve to obtain a powder C.

The mixed solution B was added to the meringue A for sponge cake, and they were mixed using a rubber spatula. The powder C was then added to the mixture, and they were further mixed using a rubber spatula to obtain a separate dough composition (cake dough).

Then, 350 g of the resulting separate dough composition was poured into a No. 6 cake mold lined with parchment paper, and the cake mold was placed in a convection oven and baked at 160°C for 25 minutes with no use of steam. After baking, the resulting sponge cake was removed from the cake mold and then allowed to cool at room temperature for 30 minutes to obtain the sponge cake of Reference Example 1. The amounts of raw materials added are shown in Table 2.

### [Reference Example 2]

The sponge cake of Reference Example 2 was obtained in the same manner as in Reference Example 1, except that MC-1 was used instead of HPMC-4 and the amounts of raw materials added were as shown in Table 2.

### [Reference Example 3]

The sponge cake of Reference Example 3 was obtained in the same manner as in Reference Example 1, except that MC-2 was used instead of HPMC-4 and the amounts of raw materials added were as shown in Table 2.

### [Reference Example 4]

The sponge cake of Reference Example 4 was obtained in the same manner as in Reference Example 1, except that no HPMC-4 was used and the amounts of raw materials added were as shown in Table 2.

**[Table 2]**

| | | Liquid of oily raw materials | | | | Powdered raw materials | | | | | | | | | Total mass | Water content |
|---|---|---|---|---|---|---|---|---|---|---|---|---|---|---|---|---|
| | | Whole egg | Butter | Water | Emulsifier | Caster sugar | Light flour | Expander | HPMC-1 | HPMC-2 | HPMC-3 | HPMC-4 | MC-1 | MC-2 | | |
| | | (g) | (g) | (g) | (g) | (g) | (g) | (g) | (g) | (g) | (g) | (g) | (g) | (g) | (g) | (9) |
| Example 1 | | 150 | 10 | 98.0 | 10 | 120 | 100 | 6 | 2 | - | - | - | - | - | 496 | 211 |
| Example 2 | | 150 | 10 | 99.0 | 10 | 120 | 100 | 6 | - | 1 | - | - | - | - | 496 | 212 |
| Example 3 | | 150 | 10 | 96.0 | 10 | 120 | 100 | 6 | 4 | - | - | - | - | - | 496 | 209 |
| Example 4 | | 150 | 10 | 99.5 | 10 | 120 | 100 | 6 | - | 0.5 | - | - | - | - | 496 | 212 |
| Comparative Example 1 | | 150 | 10 | 100.0 | 10 | 120 | 100 | 6 | - | - | - | - | - | - | 496 | 213 |
| Comparative Example 2 | | 150 | 10 | 91.0 | 10 | 120 | 100 | 6 | - | - | 9 | - | - | - | 496 | 204 |
| Comparative Example 3 | | 150 | 10 | 99.4 | 10 | 120 | 100 | 6 | - | - | - | 0.6 | - | - | 496 | 212 |
| Comparative Example 4 | | 150 | 10 | 97.0 | 10 | 120 | 100 | 6 | - | - | - | - | 3 | - | 496 | 210 |
| Comparative Example 5 | | 150 | 10 | 98.5 | 10 | 120 | 100 | 6 | - | - | - | - | - | 1.5 | 496 | 211 |
| Reference Example 1 | | 150 | 10 | 99.7 | - | 120 | 100 | 6 | - | - | - | 0.3 | - | - | 486 | 212 |
| Reference Example 2 | | 150 | 10 | 98.5 | - | 120 | 100 | 6 | - | - | - | - | 1.5 | - | 486 | 211 |
| Reference Example 3 | | 150 | 10 | 99.2 | - | 120 | 100 | 6 | - | - | - | - | - | 0.8 | 486 | 212 |
| Reference Example 4 | | 150 | 10 | 100.0 | - | 120 | 100 | 6 | - | - | - | - | - | - | 486 | 213 |

| | Liquid or oily raw materials | | | | Powdered raw materials | | | | | | | | | Total mass | Water content | content relative to flour |
|---|---|---|---|---|---|---|---|---|---|---|---|---|---|---|---|---|
| | Whole egg | Butter | Water | Emulsifier | Caster sugar | Light flour | Expander | HPMC-1 | HPMC-2 | HPMC-3 | HPMC-4 | MC-1 | MC-2 | | | |
| | (wt%) | (wt%) | (wt%) | (wt%) | (wt%) | (wt%) | (wt%) | (wt%) | (wt%) | (wt%) | (wt%) | (wt%) | (wt%) | (wt%) | (wt%) | (wt%) |
| Example 1 | 30.2 | 2.0 | 19.8 | 2.0 | 24.2 | 20.2 | 1.2 | 0.4 | - | - | | - - | - | 100 | 42.4 | 211 |
| Example 2 | 30.2 | 2.0 | 20.0 | 2.0 | 24.2 | 20.2 | 1.2 | - | 0.2 | - | | - - | - | 100 | 42.6 | 212 |
| Example 3 | 30.2 | 2.0 | 19.4 | 2.0 | 24.2 | 20.2 | 1.2 | 0.8 | - | - | | - - | - | 100 | 42.0 | 209 |
| Example 4 | 30.2 | 2.0 | 20.1 | 2.0 | 24.2 | 20.2 | 1.2 | - | 0.1 | - | | - - | - | 100 | 42.7 | 212 |
| Comparative Example 1 | 30.2 | 2.0 | 20.2 | 2.0 | 24.2 | 20.2 | 1.2 | - | - | - | | - - | - | 100 | 42.8 | 213 |
| Comparative Example 2 | 30.2 | 2.0 | 18.3 | 2.0 | 24.2 | 20.2 | 1.2 | - | - | 1.8 | | - - | - | 100 | 41.0 | 204 |
| Comparative Example 3 | 30.2 | 2.0 | 20.0 | 2.0 | 24.2 | 20.2 | 1.2 | - | - | - | 0.1 | - | - | 100 | 42.7 | 212 |
| Comparative Example 4 | 30.2 | 2.0 | 19.6 | 2.0 | 24.2 | 20.2 | 1.2 | - | - | - | | - 0.6 | - | 100 | 42.2 | 210 |
| Comparative Example 5 | 30.2 | 2.0 | 19.9 | 2.0 | 24.2 | 20.2 | 1.2 | - | - | - | | - - | 0.3 | 100 | 42.5 | 211 |
| Reference Example 1 | 30.2 | 2.0 | 20.1 | - | 24.7 | 20.2 | 1.2 | - | - | - | 0.1 | - | - | 98 | 42.8 | 212 |
| Reference Example 2 | 30.2 | 2.0 | 19.9 | - | 24.7 | 20.2 | 1.2 | - | - | - | | - 0.3 | - | 98 | 42.5 | 211 |
| Reference Example 3 | 30.2 | 2.0 | 20.0 | - | 24.7 | 20.2 | 1.2 | - | - | - | | - - | 0.2 | 98 | 42.7 | 212 |
| Reference Example 4 | 30.2 | 2.0 | 20.2 | - | 24.7 | 20.2 | 1.2 | - | - | - | | - - | - | 98 | 42.8 | 213 |

In Table 2, the water content was determined as the total amount of the mass of water (100% amount) and the water mass of the whole egg (75% amount).

### <Method for evaluating sponge cake>

### [Specific gravity and viscosity of cake dough, and weight of sponge cake]

The specific gravity and viscosity of the cake dough were determined using the remaining foamed dough composition that was not poured into the cake mold in the preparation of the sponge cake.

The specific gravity of the cake dough was determined using a 50 ml container and an electronic balance. The viscosity (Pa·s) of the cake dough was determined at 15°C using the B-type viscometer "DVM-B2" (manufactured by Tokimec).

The weight (g) of one whole sponge cake obtained out of the cake mold was determined using an electronic balance.

### [Evaluation for swelling of sponge cake]

The sponge cake was evaluated for swelling of the baked dough. The surfaces in contact with the inner bottom surface and the inner side surface of the cake mold were decided as the bottom surface and side surface of the sponge cake, respectively. The surface on the side opposite to the bottom surface of the sponge cake was decided as the baking surface of the sponge cake.

The swelling of the baked dough was measured using a bisected section surface of the sponge cake from the baking surface to the bottom surface so as to pass through the center of the cake. As for the evaluation, the following heights were measured: the height from the bottom surface to the baking surface at the side of the sponge cake (shoulder height) and the height from the bottom surface to the baking surface at the center of the sponge cake (center height).

### [Sensory evaluation of sponge cake]

The sensory evaluation for texture and flavor of the sponge cake was conducted by five panelists in the following manner.

Each panelist ate a 5 cm square sponge cake cut from the baking surface and evaluated the texture and flavor during chewing according to the following evaluation criteria. Each evaluation result (criteria) with the highest number of respondents was then adopted as the sensory evaluation result for texture or flavor.

### (Texture)

++: Feeling elastic and easily melting in the mouth
+: Normal
-: Feeling hardness and poorly melting in the mouth

### (Flavor)

++: Good flavor with scent and taste of raw materials
+: Normal but feeling a little difference when compared to the original flavor of the cake
-: Feeling a sense of discomfort when compared to the original flavor of the cake

### [Evaluation for bubbles at cross-section surface of sponge cake]

The number of bubbles, average bubble diameter and uniformity of bubble size at the cross-section surface were evaluated for the sponge cake.

The bisected section surface of the sponge cake from the baking surface to the bottom surface so as to pass through the center of the cake was photographed with the "C-Cell imaging system" (manufactured by Calibre Control International) using one of the bisected sections of the cake, and then the image was analyzed to obtain values relating to the number of bubbles, average bubble diameter and non-uniformity. The special software for the C-Cell imaging system was used for the image analysis. The uniformity of bubble size was evaluated using the obtained non-uniformity values according to the following evaluation criteria. In addition, the non-uniformity values obtained from the image analysis were calculated so as to be larger values for larger variations in bubble size.
++: Non-uniformity value between 0 or more and less than 4
+: Non-uniformity value between 4 or more and less than 8
-: Non-uniformity value of 8 or more

### [Evaluation for flexibility of sponge cake]

The samples for measuring the elasticity of sponge cake were prepared by cutting four 3 cm square pieces from each cake, not including the baking surface. The "creep meter" (manufactured by Yamaden) was used to measure elasticity, and the maximum load was recorded when the four samples of each cake were pressed to a thickness of 1.5 cm (strain ratio 50%). The average of the maximum loads of the four samples was employed to evaluate the flexibility of the sponge cake. A 4 cm diameter disc jig was used as the measurement jig. From the average of the measured maximum loads, the flexibility of each cake was evaluated according to the following evaluation criteria.
++: Average maximum load between 0 N or more and less than 3.3 N
+: Average maximum load between 3.3 N or more and less than 4.2 N
-: Average maximum load of 4.2 N or more

### <Evaluation results>

The measurement results of the various physical properties of the cake dough and sponge cake are shown in Table 3.

**[Table 3]**

| | Cellulose derivatives | Cake dough | | Sponge cake | | | Sensory evaluation | | Bubble evaluation at cross-section surface | | | Flexibility |
|---|---|---|---|---|---|---|---|---|---|---|---|---|
| | Content | Specific gravity | Viscosity | Weight | Shoulder height | Center height | | | Number of bubbles | Average bubble diameter | Uniformity of bubble size | |
| | (%) | (mL/g) | (Pa - s) | (g) | (cm) | (cm) | Texture | Flavor | (qty) | (mm) | | |
| Example 1 | 0.40 | 0.39 | 36 | 329 | 4.5 | 5.4 | ++ | ++ | 2,920 | 2.6 | ++ | ++ |
| Example 2 | 0.20 | 0.42 | 15 | 329 | 4.5 | 5.2 | ++ | ++ | 2,820 | 2.4 | ++ | ++ |
| Example 3 | 0.81 | 0.38 | 42 | 329 | 4.6 | 5.6 | ++ | ++ | 2,955 | 2.8 | ++ | ++ |
| Example 4 | 0.10 | 0.45 | 13 | 327 | 4.4 | 5.0 | ++ | ++ | 2,690 | 2.7 | ++ | ++ |
| Comparative Example 1 | 0.00 | 0.60 | 17 | 327 | 3.8 | 4.6 | - | ++ | 2,575 | 2.6 | ++ | - |
| Comparative Example 2 | 1.81 | 0.54 | 55 | 331 | 3.9 | 5.5 | + | + | 2,670 | 3.5 | - | + |
| Comparative Example 3 | 0.12 | 0.50 | 12 | 330 | 4.2 | 4.9 | + | ++ | 2,685 | 2.2 | ++ | + |
| Comparative Example 4 | 0.40 | 0.83 | 16 | 325 | 2.9 | 3.8 | - | ++ | 1,980 | 2.2 | ++ | - |
| Comparative Example 5 | 0.30 | 0.61 | 13 | 327 | 3.8 | 4.7 | - | ++ | 2,120 | 2.3 | + | - |
| Reference Example 1 | 0.06 | 0.33 | 35 | 328 | 4.7 | 5.3 | ++ | ++ | 2,917 | 2.3 | + | ++ |
| Reference Example 2 | 0.31 | 0.37 | 37 | 329 | 4.6 | 5.4 | ++ | ++ | 3,852 | 1.7 | + | ++ |
| Reference Example 3 | 0.16 | 0.29 | 40 | 329 | 4.7 | 5.5 | ++ | ++ | 3,743 | 1.8 | + | ++ |
| Reference Example 4 | 0.00 | 0.42 | 30 | 331 | 4.2 | 5.0 | + | ++ | 2,991 | 1.9 | + | + |

As shown in Table 3, the sponge cakes of Examples 1 and 2 prepared by the all-in-mix method using hydroxypropyl methylcellulose whose viscosity is within the range between 30 mPa·s and 800 mPa·s when measured with a viscometer at 20°C using a 2% by mass aqueous solution had higher shoulder height and center height, and were excellent in texture during eating and in flexibility, when compared with the sponge cake of Comparative Example 1 prepared using no hydroxypropyl methylcellulose. It was found out that the sponge cakes of Examples 3 and 4 had improved swelling and were excellent in appearance and texture, as with the sponge cakes of Examples 1 and 2, even when the amounts of hydroxypropyl methylcellulose added were changed.

In contrast, the sponge cake of Comparative Example 2, which employed hydroxypropyl methylcellulose whose viscosity at 20°C of the 2% by mass aqueous solution was lower than that of each hydroxypropyl methylcellulose employed in Examples 1 to 4, caused nonuniform shrinkage during cooling after baking, resulting in a lower shoulder height and a poorer appearance when compared to the sponge cake of Examples 1 to 4. The sponge cake of Comparative Example 2 also had a large variation in the size of air bubbles in the cross-section surface of the cake, resulting in a poorer cross-sectional appearance. This may have been caused by the use of HPMC-3 whose viscosity at 20°C of the 2% by mass aqueous solution was lower, which had an excessively high bubble stability but a poor ability to retain the cake shape. Furthermore, the sponge cake of Comparative Example 2 had a weakened light flour-derived flavor and caused a faintly unique flavor assumed to be derived from HPMC-3 thereby a poorer flavor as compared to the sponge cake of Comparative Example 1.

The sponge cake of Comparative Example 3, which employed hydroxypropyl methylcellulose whose viscosity at 20°C of the 2% by mass aqueous solution was higher than that of each hydroxypropyl methylcellulose employed in Examples 1 to 4, had slightly improved swelling as compared to the sponge cake of Comparative Example 1 with no hydroxypropyl methylcellulose but had poorer swelling as compared to the sponge cakes of Examples 1 to 4. HPMC-4 employed in Comparative Example 3 had higher viscosity and poorer solubility when compared to HPMC-1 and HPMC-2 used in Examples 1 to 2. This leads to an assumption that if the content of HPMC-4 were larger, some of HPMC-4 could not dissolve by the all-in-mix method so that no sufficient foaming or bubble stability might be achieved, and the baking shrinkage would occur. Furthermore, it is assumed that since HPMC-4 has higher gelling performance when heated, the large content of HPMC-4 would decrease the flexibility of the cake dough during baking and prevent the cake dough from expanding so that the resulting sponge cake could not swell very well. Therefore, it is considered that even if the content were adjusted, HPMC-4 could not impart good swelling and flexibility to a sponge cake as when HPMC-1 or HPMC-2 were used, which might not improve the texture of a sponge cake.

The sponge cakes of Comparative Examples 4 and 5, which employed methylcellulose having surface activity and thermo-reversible gelling ability as with hydroxypropyl methylcellulose instead, had the same or poorer swelling as the sponge cake of Comparative Example 1. As such, it was not confirmed that methylcellulose had the effect of improving the swelling of sponge cake. This would be because methylcellulose has slightly lower solubility in water than hydroxypropyl methylcellulose, and under the conditions of mixing methylcellulose with raw materials containing a lot of other components than water by the all-in-mix method, methylcellulose could not dissolve sufficiently, resulting in insufficient swelling of the sponge cake.

The sponge cakes of Reference Examples 1 to 3, which employed HPMC-4, MC-1, or MC-2 that did not show sufficient effect on improving the swelling of the sponge cake prepared by the all-in-mix method, were prepared by the egg white separate batter method, and had improved swelling as compared to the sponge cake of Reference Example 4 with no addition of them, and had the same or better swelling even when compared to the sponge cake of Example 1. In other words, HPMC-4, MC-1, or MC-2 showed the swelling-enhancing effect according to the egg white separate batter method while showing no expected swelling-enhancing effect according to the all-in-mix method, which was a preparation method in which they are difficult to dissolve. In contrast, HPMC-1 or HPMC-2, hydroxypropyl methylcellulose whose viscosity at 20°C of the 2% by mass aqueous solution was within the range between 30 mPa·s and 800 mPa·s showed the swelling-improving effect even according to the all-in-mix method. The sponge cakes of Reference Examples 1 to 4, which were obtained by the egg white separate batter method, had the smaller foam diameter and more non-uniform bubble size as compared to the sponge cakes of Examples 1 to 4, which were obtained by the all-in-mix method.

These results indicate that even when applying the all-in-mix method, which is considered unsuitable for producing a sponge cake with favorable swelling, the use of hydroxypropyl methylcellulose, which is one of cellulose derivatives and further has a viscosity of 30 mPa·s to 800 mPa·s when measured with a viscometer at 20°C using a 2% by mass aqueous solution, allows a sponge cake which has good puffiness, favorable appearance and texture, and palatable flavor to be easily produced.

Table 4 shows Formulation Examples 1 to 6, which can produce a sponge cake with improved swelling, favorable appearance and texture, and palatable flavor, as in Examples 1 to 4.

**[Table 4]**

| | | Liquid or oily raw materials | | | | | | | Powdered raw materials | | | | | | | | | Total mass | Water content |
|---|---|---|---|---|---|---|---|---|---|---|---|---|---|---|---|---|---|---|---|
| | | Egg | Edible oil | | | Water | Milk | Emulsifier | sugar | | | Cereal flour | | | Expander | HPMC-1 | HPMC-2 | | |
| | | Whole Egg | Butter | Rapeseed oil | Shortening | | | | Caster sugar | Fructo-oligosaccharide | Trehalose | Light flour | Strong flour | Rice flour | | | | | |
| | | (g) | (g) | (g) | (g) | (g) | (g) | (g) | (g) | (g) | (g) | (9) | (g) | (g) | (g) | (g) | (g) | (g) | (g) |
| Formulation Example 1 | | 150 | - | 10 | - | 40.0 | 50.0 | 6 | 110 | - | - | 100 | - | - | 4 | - | 1 | 471 | 197 |
| Formulation Example 2 | | 150 | - | - | 10 | 600 | 30.0 | 3 | 120 | - | - | 100 | - | - | 5 | 2 | - | 480 | 199 |
| Formulation Example 3 | | 150 | 10 | - | - | 90.0 | - | 6 | 50 | 70 | - | 100 | - | - | 6 | 2 | - | 484 | 203 |
| Formulation Example 4 | | 150 | 10 | - | - | 95.0 | - | 6 | 90 | - | 30 | 100 | - | - | 6 | 2 | - | 489 | 208 |
| Formulation Example 5 | | 140 | 10 | - | - | 100.0 | - | 6 | 120 | - | - | 80 | 20 | - | 6 | 2 | - | 484 | 205 |
| Formulation Example 6 | | 160 | 10 | - | - | 95.0 | - | 6 | 120 | - | - | 80 | - | 20 | 6 | 2 | - | 499 | 215 |

| | Liquid or oily raw materials | | | | | | | Powdered raw materials | | | | | | | | | Total mass | Water content | Water content relative to flour |
|---|---|---|---|---|---|---|---|---|---|---|---|---|---|---|---|---|---|---|---|
| | Whole Egg | Butter | Rapeseed oil | Shortening | Water | Milk | Emulsifier | Caster sugar | Fructo-oligosaccharide | Trehalose | Light flour | Strong flour | Rice flour | Expander | HPMC-1 | HPMC-2 | | | |
| | (wt%) | (wt%) | (wt%) | (wt%) | | | | (wt%) | (wt%) | (wt%) | (wt%) | (wt%) | (wt%) | (wt%) | (wt%) | (wt%) | (wt%) | (wt%) | (wt%) |
| Formulation Example 1 | 31.8 | - | 2.1 | - | 8.5 | 10.6 | 1.3 | 23.4 | - | - | 21.2 | - | - | 0.8 | - | 0.2 | 100 | 41.8 | 197 |
| Formulation Example 2 | 31.3 | - | - | 2.1 | 12.5 | 6.4 | 0.6 | 25.0 | - | - | 20.8 | - | - | 1.0 | 0.4 | - | 100 | 41.5 | 199 |
| Formulation Example 3 | 31.0 | 2.1 | - | - | 18.6 | - | 1.2 | 10.3 | 14.5 | - | 20.7 | - | - | 1.2 | 0.4 | - | 100 | 41.8 | 203 |
| Formulation Example 4 | 30.7 | 2.0 | - | - | 19.4 | - | 1.2 | 18.4 | - | 6.2 | 20.4 | - | - | 1.2 | 0.4 | - | 100 | 42.4 | 208 |
| Formulation Example 5 | 28.9 | 2.1 | - | - | 20.7 | - | 1.2 | 24.8 | - | - | 16.5 | 4.1 | - | 1.2 | 0.4 | - | 100 | 42.4 | 205 |
| Formulation Example 6 | 32.1 | 2.0 | - | - | 19.0 | - | 1.2 | 24.0 | - | - | 16.0 | - | 4.1 | 1.2 | 0.4 | - | 100 | 43.1 | 215 |

### Industrial applicability

According to each aspect of the present invention, by using hydroxypropyl methylcellulose whose viscosity is within a predetermined range, highly palatable sponge cakes with improved swelling thereby favorable appearance and texture can be produced without impairing the original flavor of the sponge cakes in large quantities on an industrial scale by a simple all-in-mix method.

## Claims

1. A method of producing a sponge cake, comprising foaming a dough composition comprising hydroxypropyl methylcellulose having a viscosity of 30 mPa·s to 800 mPa·s when measured with a viscometer at 20°C using a 2% by mass aqueous solution, cereal flour comprising light flour, egg, sugar, an expander, edible oil and water by the all-in-mix method to obtain a cake dough, and baking the cake dough to obtain a sponge cake.

2. The method of producing a sponge cake according to claim 1, wherein the hydroxypropyl methylcellulose is **characterized by** a viscosity of 40 mPa·s to 600 mPa·s, particularly of 50 mPa·s to 400 mPa·s, when measured with a viscometer at 20°C using a 2% by mass aqueous solution.

3. The method of producing a sponge cake according to any one of the preceding claims 1 or 2, wherein the content of hydroxypropyl methylcellulose is in the range between 0.05% by mass and 2% by mass relative to the total mass of the cake dough.

4. The method according to any one of the preceding claims, wherein the content of hydroxypropyl methylcellulose is in the range of 0.05% by mass to 1% by mass, particularly 0.1% by mass to 0.85% by mass.

5. The method of producing a sponge cake according to any one of the preceding claims 1 to 4, wherein the expander is an expander free from aluminum salt.

6. The method of producing a sponge cake according to any one of the preceding claims 1 to 5, wherein the expander is selected from baking powder, baking soda (sodium bicarbonate), ammonium carbonate and ammonium bicarbonate.

7. The method of producing a sponge cake according to any one of the preceding claims, wherein the cereal flour is cereal flour comprising 75% by mass or more light flour.

8. The method of producing a sponge cake according to any one of the preceding claims, wherein the cake dough has a water content of 120 parts by mass to 250 parts by mass relative to 100 parts by mass of the cereal flour.

9. A dough composition for sponge cake comprising hydroxypropyl methylcellulose having a viscosity of 30 mPa·s to 800 mPa·s when measured with a viscometer at 20°C using a 2% by mass aqueous solution, cereal flour comprising light flour, sugar and an expander.

10. The dough composition according to claim 9, wherein the hydroxypropyl methylcellulose is **characterized by** a viscosity of 40 mPa·s to 600 mPa·s, particularly of 50 mPa·s to 400 mPa·s, when measured with a viscometer at 20°C using a 2% by mass aqueous solution.

11. The dough composition for sponge cake according to claim 6, wherein the dough composition for sponge cake is in powder form.

12. Use of a composition for improving the swelling of sponge cake, said composition comprising hydroxypropyl methylcellulose having a viscosity of 30 mPa·s to 800 mPa·s when measured with a viscometer at 20°C using a 2% by mass aqueous solution.

13. A method for improving the swelling of sponge cake comprising using as a raw material hydroxypropyl methylcellulose having a viscosity of 30 mPa·s to 800 mPa·s when measured with a viscometer at 20°C using a 2% by mass aqueous solution.
